# EUROPEAN PATENT APPLICATION

(11) **EP 4 656 847 A2**
(43) Date of publication of application: **03.12.2025**
(21) Application number: 25179333.7
(22) Date of filing: 28.05.2025
(51) Int. Cl.: F01K 13/00, F22B 1/18, F22B 25/00

(54) **COGENERATION UNIT**

(30) Priority: 29.05.2024 CZ 20240223
(71) Applicant: Jan, Jiri, 25164 Mnichovice (CZ)
(72) Inventor: Jan, Jiri, 25164 Mnichovice (CZ)
(74) Representative: Kratochvil, Vaclav

(57) **Abstract**

Adding pressurized hot water heat exchangers to the flue gas path of the hot water boiler allows steam to be generated for the steam engine driving the electric power generator.

## Description

### Field of the Invention.

The invention relates to a cogeneration unit extracting steam from a hot water boiler for a steam engine driving an electric power generator while maintaining the original purpose of the hot water boiler-heating.

### Background of the Invention.

Previously known embodiments of hot water boilers for heating single-family houses and other smaller buildings produce heating water, the temperature of which is not sufficient to generate steam to power a steam engine with an electricity generator. It therefore does not allow cogeneration of heat and electricity.

### Summary of the Invention.

The essence of the invention is a cogeneration unit consisting of a hot water boiler comprising a combustion chamber, a heating water exchanger connected to the heating water circuit for heating located in the flue path closer to the flue outlet, a hot water exchanger located in the flue path between the heating water exchanger and the combustion chamber, connected to the hot water circuit and coupled via the evaporator heat exchanger to the steam circuit for generating steam for a steam engine with an electric power generator, wherein the hot water exchanger is formed by at least two separate pressurized heat exchangers arranged in parallel side by side in the flue path. Pressurized exchangers are made of tubes. A simpler embodiment comprises a single tube surrounded by flue gas only on the outer surface. A preferred embodiment comprises two tubes, where the tube with a larger diameter is flown around the flue gases on the outer surface and the smaller tube forming the cavity is flown around the flue gases on the inner surface. The steam engine consists of at least one piston and cylinder, and each working area defined by the piston and cylinder is filled with steam from one or more separate steam circuits, corresponding hot water circuits and pressurized hot water heat exchangers. This concept allows higher temperatures and pressures to be achieved in small pressurized heat exchangers for steam generation.

### Brief Description of the Drawings

Fig. 1 shows a hot water boiler in section with a pressurized hot water heat exchanger.
Fig. 2 shows a hot water boiler in a horizontal section with four pressurized hot water heat exchanger.
Fig. 3 shows a simple variant of a pressurized hot water heat exchanger in section.
Fig. 4 shows a preferred variant of a pressurized hot water heat exchanger in section.
Fig. 5 shows a schematic diagram of a cogeneration unit with two pressurized hot water heat exchangers and a steam engine with a single double-acting cylinder.
Fig. 6 shows a simplified schematic diagram of a cogeneration unit with four hot water heat exchangers and a steam engine with a single double-acting cylinder.

### Exemplary Embodiments of the Invention

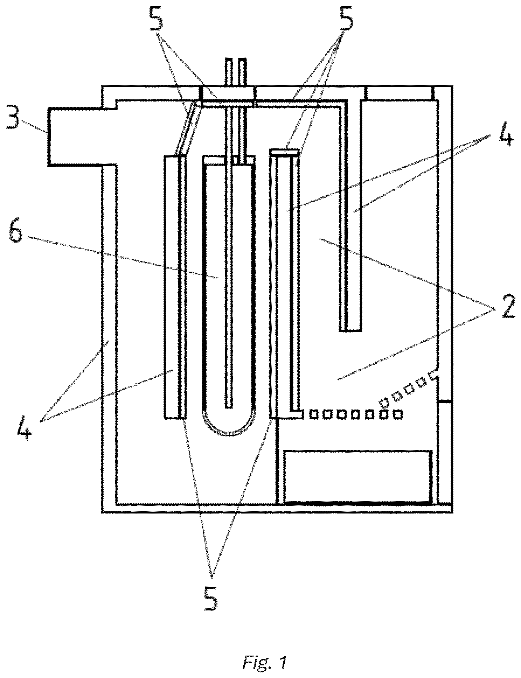

An exemplary implementation of the invention is shown successively in Fig. 1, Fig. 2, Fig. 3, Fig. 4, Fig. 5, and Fig. 6.

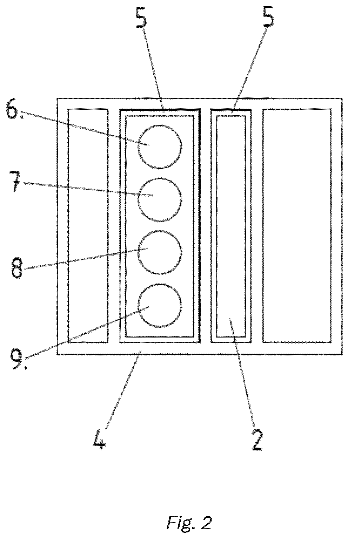

In the hot water boiler 1 consisting (Fig. 1, Fig. 2) of a combustion chamber 2 insulated with a refractory lining 5 from the heating water heat exchanger 4 located in the flue path closer to the flue outlet 3, pressurized hot water heat exchangers 6, 7, 8, 9 are located between the combustion chamber 2 and the heating water heat exchanger 4, also insulated with a refractory lining 5 from the heating water heat exchanger 4. Thus, the pressurized hot water heat exchangers 6, 7, 8, 9 are placed in the high temperature flue gas just behind the combustion chamber 2, which allows them to achieve a higher water temperature than in the heating water heat exchanger 4.

A higher temperature in the 6,7,8,9 pressurized hot water heat exchangers also results in a higher pressure and is therefore constructed from tubes.

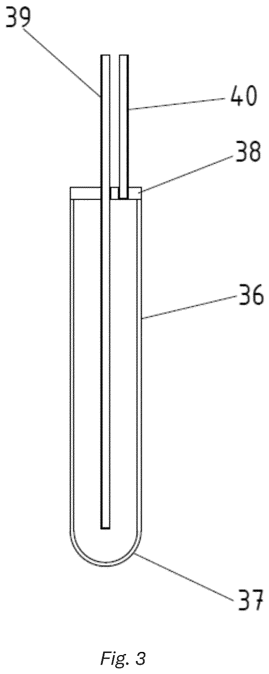

A simpler variant (Fig. 3) of the pressurized heat exchanger consists of an outer tube 36, a bottom 37, a flange 38, an inlet tube 39 and an outlet tube 40. The pressurized heat exchanger constructed this way is flown around the flue gas only on the outer surface.

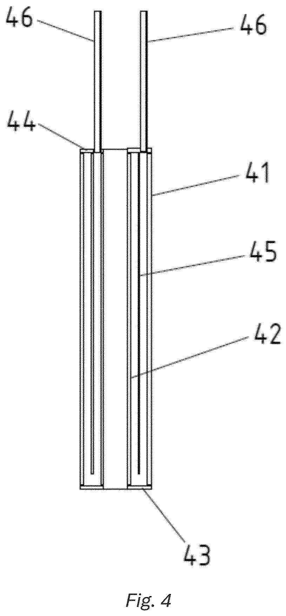

A more advantageous variant (Fig. 4) of the pressurized heat exchanger consists of an outer tube 41, an inner tube 42, an annular bottom 43, an annular flange 44, a shorter separating tube 45 connected to a flange 44 and two connecting pipes 46. In a heat exchanger constructed in this way, the flue gas flows around both the outer surface of the outer tube 41 and on the inner surface of the inner tube 42, which results in a larger heat exchange area and therefore a better ratio between the water content and the heat exchange area.

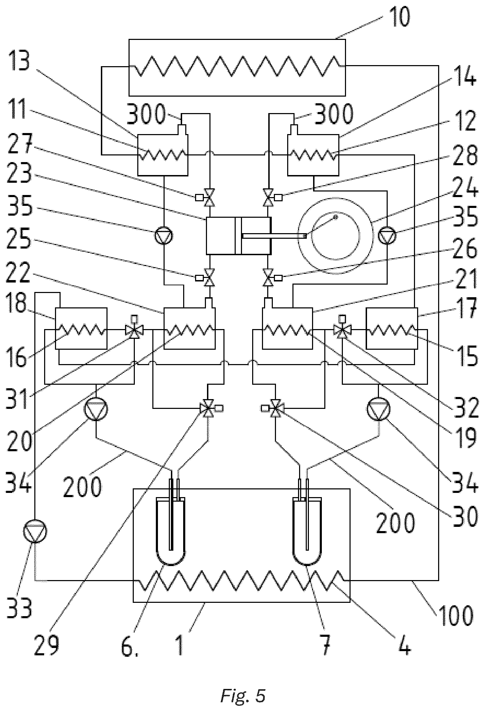

The figure (Fig. 5) shows a diagram with the simplest variant of the cogeneration unit consisting of a hot water boiler 1 with only two pressurized heat exchangers 6, 7 and a steam engine 23 with one double-acting cylinder and a electric power generator 24.

As can be seen from the diagram, the cogeneration unit consists of three types of circuits with their own heat exchange medium-water.

The first type of heating water circuit 100 consists of heating water exchanger 4, heating system 10, condenser cooler 11, condenser cooler 12, evaporator cooler vessel 17, evaporator cooler vessel 18 and pump 33 of the heating circuit.

The second type of hot water circuit 200 appears twice in the diagram and consists of, in the first case, the pressurized hot water exchanger 6, a three-way valve 29, an evaporator heat exchanger 20, a three-way control valve 31, an evaporator cooler 16 and a pump 34 of the hot water circuit. In the latter case, it consists of a pressurized hot water heat exchanger 7, a three-way valve 30, an evaporator heat exchanger 19, a three-way control valve 32, an evaporator cooler 15 and a circulation pump 34 of the hot water circuit.

The third type of steam circuit 300 is also in the diagram twice and is consists of, in the first case, an evaporator vessel 22, a filling valve 25, a steam engine 23, an exhaust valve 27, a condenser cooler vessel 13 and a condensate pump 35. In the latter case, it consists of an evaporator vessel 21, a filling valve 26, a steam engine 23, an exhaust valve 28, a condenser cooler vessel 14 and a condensate pump 35.

The first type of heating water circuit 100 is designed for heating by directing the heat obtained from the hot water boiler 1 in the heating water exchanger 4 to the heating system 10 and at the same time is designed to extract the waste (condensing) heat from the steam circuits 300 of the condenser cooler 11 and the condenser cooler 12 and at the same time is designed to extract excess heat from the hot water circuits 200 of the evaporator cooler vessel 17 and from the evaporator cooler vessel 18 by conducting the heat thus obtained through the circulation pump 33 back to the hot water boiler 1 to the heating water exchanger 4.

The second type of hot water circuit 200 is designed to produce hot water in a pressurized hot water heat exchanger 6 and in a pressurized hot water heat exchanger 7.

In the first case, the hot water is routed from the pressurized hot water heat exchanger 6 through the three-way valve 29 to the evaporator heat exchanger 20, then through the three-way control valve 31 to the evaporator cooler 16 and through the circulation pump 34 of the hot water circuit back to the pressurized hot water heat exchanger 6.

In the latter case, the hot water from the pressurized hot water heat exchanger 7 is routed through the three-way valve 30 to the evaporator heat exchanger 19, then through the three-way control valve 32 to the evaporator cooler 15 and through the circulation pump 34 of the hot water circuit back to the pressurized hot water heat exchanger 7.

The third type of steam circuit 300 is designed to produce steam for steam engine 23 and condense it after the operating cycle.

In the first case, the steam evaporated in the evaporator vessel 22 is cyclically charged through the filling valve 25 into the steam engine 23 cylinder and from there, after the operation cycle, through the exhaust valve 27 into the condenser cooler vessel 13 and after condensation through the condensate pump 35 back into the evaporator vessel 22.

In the latter case, the steam evaporated in the evaporator vessel 21 is cyclically injected through the filling valve 26 into the steam engine 23 cylinder, and from there, after carrying out the working cycle through the exhaust valve 28 into the condenser cooler vessel 14 and after condensation through the condensate pump 35 back into the evaporator vessel 21.

With the connection method described above, the cogeneration unit simultaneously generates heat for heating the building and electricity. The fraction between the heat intended for heating the building and the heat for generating electricity can be partially adjusted by three-way control valves 31 and 32, which allow some of the heat from pressurized hot water heat exchangers 6 and 7 to be sent through evaporator coolers 16 and 15 to the heating water circuit 100 or back to pressurized hot water heat exchangers 6 and 7. This option is also used to control the temperature for water evaporation in evaporator vessels 22 and 21.

The cogeneration unit can also operate in a mode where it does not generate electricity and only supplies heat for heating. In this mode, the three-way valves 29 and 30 are set to the position where hot water does not pass through the evaporator heat exchangers 20 and 19 but directly through the three-way control valves 31 and 32 to the evaporator coolers 16 and 15, where they pass heat through the evaporator vessels 18 and 17 to the return line of the heating water circuit 100.

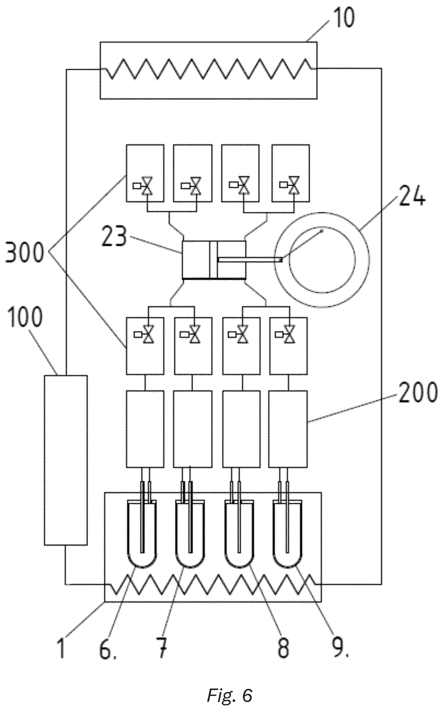

Fig. 6 shows a cogeneration unit with a hot water boiler 1 with four pressurized water heat exchangers 6, 7,8 and 9 and a steam engine 23 with the electric power generator 24. It contains one heating water circuit 100, four hot water circuits 200 and four steam circuits 300.

The function of the heating water circuit 100, the hot water circuit 200 and the steam circuit 300 is described above.

The advantage of this design is that more steam can be extracted from the hot water boiler 1 to drive the steam engine 23 with the electric power generator 24.

### Industrial Applicability.

The invention can be used to produce small cogeneration units for single-family houses and other smaller buildings for the joint production of heat and electricity. The advantage is the ability to heat up using solid fuels from renewable sources with zero carbon footprint. Another advantage of this renewable resource is that it does not depend on sunlight and wind in order to generate electricity.

### Reference marks.

1 - hot water boiler
2 - combustion chamber
3 - flue outlet
4 - heating water exchanger
5 - refractory lining
6 - pressurized hot water heat exchanger
7 - pressurized hot water heat exchanger
8 - pressurized hot water heat exchanger
9 - pressurized hot water heat exchanger
10 - heating system
11 - condenser cooler
12 - condenser cooler
13 - condenser cooler vessel
14 - condenser cooler vessel
15 - evaporator cooler
16 - evaporator cooler
17 - evaporator cooler vessel
18 - evaporator cooler vessel
19 - evaporator heat exchanger
20 - evaporator heat exchanger
21 - evaporator vessel
22 - evaporator vessel
23 - steam engine
24 - electric power generator
25 - filling valve
26 - filling valve
27 - exhaust valve
28 - exhaust valve
29 - three-way valve
30 - three-way valve
31 - three-way control valve
32 - three-way control valve
33 - circulation pump of the heating circuit
34 - circulation pump of the hot water circuit
35 - condensate pump
36 - outer tube
37 - bottom
38 - flange
39 - inlet tube
40 - outlet tube
41 - outer tube
42 - inner tube
43 - annular bottom
44 - annular flange
45 - separating tube
46 - connection tube
100 - heating water circuit
200 - hot water circuit
300 - steam circuit

## Claims

1. A cogeneration unit consisting of a hot water boiler (1) consisting of a combustion chamber (2), a heating water exchanger (4) connected in a heating water circuit (100) for heating and located in a flue path closer to a flue outlet (3) and a hot water exchanger located in the flue path between the heating water exchanger (4) and the combustion chamber (2) and connected in a hot water circuit (200) and connected via an evaporator heat exchanger (19, 20) to a steam circuit (300) for steam generation for a steam engine (23) with an electric power generator (24), **characterised in that** the hot water exchanger is formed by at least two separate pressurized hot water heat exchangers (6) (7) (8) (9), located parallel to each other in the flue path.

2. The cogeneration unit according to claim 1, **characterised in that** the pressurized hot water heat exchangers (6) (7) (8) (9) are formed by an outer tube (36) closed at the bottom end with a bottom (37) and at the top end with a flange (38) in the centre of which an inlet tube (39) is coaxially mounted relative to the outer tube (36) and an outlet tube (40) connected to a space between the outer tube (36) and the inlet tube (39) is located outside a centre of the flange (38).

3. The cogeneration unit according to claim 1, **characterised in that** the pressurized hot water heat exchangers (6) (7) (8) (9) are formed by an outer tube (41) and an inner tube (42) coaxially located therein, a space defined between the outer tube (41) and the inner tube (42) being closed at the lower end by an annular bottom (43) and closed at the upper end by an annular flange (44) with a shorter separating tube (45) coaxially located in the space between the outer tube (41) and the inner tube (42) dividing the space between the outer tube (41) and the inner tube (42) into two parts, each of which is connected to one connecting pipe (46) in the annular flange (44).

4. The cogeneration unit according to claim 1, **characterised in that** the steam engine (23) is composed of at least one piston and cylinder and each working area defined by the piston and cylinder is filled from one or more separate circuits (300) of steam to which the hot water circuits (200) and pressurized hot water heat exchangers (6,7,8,9) belong.
